# EUROPEAN PATENT SPECIFICATION

(11) **EP 1 953 998 B1**
(45) Date of publication and mention of the grant of the patent: **18.03.2015**
(21) Application number: 08100352.7
(22) Date of filing: 11.01.2008
(51) Int. Cl.: H04L 29/06

(54) **Methods and Apparatuses for Providing and Using Content Allowing Integrity Verification**
Verfahren und Vorrichtungen zur Bereitstellung und Verwendung von inhaltszulässiger Integritätsprüfung
Procédés et appareils pour fournir et utiliser un contenu autorisant la vérification d'intégrité

(30) Priority: 05.02.2007 KR 20070011823
(43) Date of publication of application: 06.08.2008
(73) Proprietor: Samsung Electronics Co., Ltd., Suwon-si, Gyeonggi-do, 443-742 (KR)
(72) Inventor: Yoon, Young-sun, Suwon-si, Gyeonggi-do (KR)
(74) Representative: Robinson, Ian Michael

(56) References cited:
- US-A1- 2003 126 276
- US-B1- 6 604 224
- JUERGEN CARSTENS: "Content Segment Descriptor for Improved Segmented Software Download", IP.COM JOURNAL, IP.COM INC., WEST HENRIETTA, NY, US, 25 October 2003 (2003-10-25), XP013012966, ISSN: 1533-0001
- HONG HEATHER YU ET AL: "Joint content authentication and error control for wireless multimedia communications", CONSUMER COMMUNICATIONS AND NETWORKING CONFERENCE, 2004. CCNC 2004. FI RST IEEE LAS VEGAS, NV, USA 5-8 JAN. 2004, PISCATAWAY, NJ, USA,IEEE, 5 January 2004 (2004-01-05), pages 412-417, XP010696863, ISBN: 978-0-7803-8145-2

## Description

### BACKGROUND OF THE INVENTION

### 1. Field of the Invention

Methods and apparatuses consistent with the present invention relate to integrity verification for determining whether content has been altered during distribution of the content, and more particularly, to providing content allowing integrity verification and using the content, and an apparatus therefor.

### 2. Description of the Related Art

As the number of online content services has increased, content is distributed using various ways. Accordingly, it is possible that the content is forged or altered during the distribution thereof, thus increasing a need for a method of verifying whether the content has been forged or altered.

US-B1-6,604,224 discloses general background information in the field of content transmission using cyclic redundancy checks (CRCs). The appended claims have been characterised based on this document. Also, JUERGEN CARSTENS: "Content Segment Descriptor for Improved Segmented Software Download" 25 October 2003 mentions using a cryptographic checksum (hash) or a digital signature (public-key cryptography) applied to the whole content, the individual segments, or both.

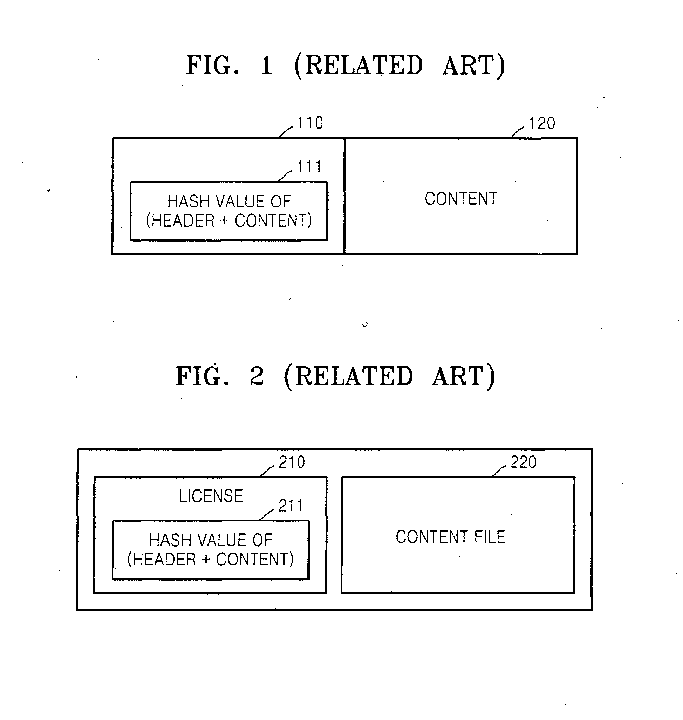

FIG. 1 is a diagram illustrating a content file in which a hash value has been inserted into a header 110 according to a related art method. Referring to FIG. 1, a hash value 111 obtained by applying a hash function to the whole content file that includes the header 110 and content 120 is inserted into the header 110. In order to verify the integrity of the content 120, a hash value first is calculated by applying the same hash function to the whole content file, and the hash value is compared with the hash value 111 extracted from the header 110. If the two hash values are equal to each other, it is determined that the content file has not been forged, and if they are not equal, it is determined that the content file has been forged.

FIG. 2 is a diagram illustrating content in which a hash value 211 is inserted into a license file 210 according to a related art method. Referring to FIG. 2, the hash value 211 of the whole content file 220 is calculated as described above with reference to FIG. 1, and is recorded in the license file 210 included in the content, together with the content file 220. A method of verifying the integrity of the content file is performed as described above with reference to FIG. 1.

The above method can be used when the whole content file is stored in a local storage device. Since the integrity of content is verified after receiving the whole content file, if content is reproduced while being received little by little via a streaming service, it is difficult to verify the integrity of the whole content file or a part of the content file before the reproduction.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

According to the present invention there is provided an apparatus and method as set forth in the appended claims. Other features of the invention will be apparent from the dependent claims, and the description which follows.

The present invention provides a method and apparatus for providing content by using integrity verification that can be effectively applied even during a content streaming service, and a method and apparatus for using the content.

According to an aspect of the present invention, there is provided a method of providing content allowing integrity verification, the method comprising dividing the content into a plurality of parts; and inserting integrity verification information for each of the parts of the content into the content.

The method may further include before transmitting each of the parts of the content, transmitting the integrity verification information corresponding to each of the parts.

The inserting of the integrity verification information may comprise respectively inserting hash values into the parts, where each of the hash values is calculated by applying a hash function to each of the parts.

The inserting of the hash values may comprise recording the hash values of the respective parts in a plurality of packets each having an identifier and transmitting the packets, when transmitting the content. Alternatively, the inserting of the hash values may comprise recording the hash values of the respective parts in a plurality of null packets and transmitting the null packets, when transmitting the content.

The inserting of the integrity verification information may comprise inserting a value obtained by encrypting secret information into each of the parts.

The method may further include providing information indicating locations where the integrity verification information for the respective parts is respectively inserted so as to allow a user of the content to detect the integrity verification information.

The providing of the information may comprise electronically signing the information regarding the locations with a secret key of a content provider.

The providing of the information may comprise recording the information regarding the locations in a header of the content. Alternatively, the providing of the information may include recording the information regarding the locations in a license file for the content.

The inserting of the value obtained by encrypting the secret information may comprise encrypting the secret information with a secret key of a content provider.

The method may further include providing information obtained by encrypting the secret key of the content with unique information of the user so as to allow the user of the content to obtain the secret key of the content provider.

The method may further include providing information obtained by encrypting the secret information with unique information of the user so as to allow the user of the content to determine whether the encrypted secret information has been altered.

According to another aspect of the present invention, there is provided a method of using content allowing integrity verification, the method comprising receiving content containing integrity verification information for each of a plurality of parts of the content; and verifying the integrity of each of the parts based on the integrity verification information.

The integrity verification information for each of the parts may comprise a first hash value that a content provider calculates by applying a hash function to each of the parts, and the verifying of the integrity of each of the parts comprises calculating a second hash value by applying a hash function to each of the parts; and comparing the first hash value with the second hash value.

The verifying of the integrity of each of the parts may comprise verifying the integrity of each of the parts when buffering of each of the parts by a play buffer is completed.

The integrity verification information for each of the parts may comprise first encrypted secret information obtained by the content provider encrypting secret information with a secret key. The verifying of each of the parts may comprise detecting and decrypting the first encrypted secret information from each of the parts; and determining whether the first encrypted secret information has been altered.

The method may further include receiving information regarding a plurality of locations where the integrity verification information for the respective parts are respectively inserted. The receiving of the information regarding the locations may comprise checking an electronic signature of the content provider applied to the information regarding the locations.

The method may further include receiving second encrypted secret information obtained by the content provider encrypting the secret information with unique information of the user, wherein the determining of whether the first encrypted secret information has been altered comprises comparing the result of decrypting the second encrypted secret information using the unique information of the user with the result of decrypting the first encrypted secret information.

The method may further include receiving information obtained by the content provider encrypting the secret key with the unique information of the user, wherein the decrypting of the first encrypted secret information comprises decrypting the first encrypted secret information using as a key the result of decrypting the received secret key encrypted using the unique information of the user.

According to another aspect of the present invention, there is provide an apparatus for providing content allowing integrity verification, the apparatus comprising an integrity verification information providing unit dividing the content into a plurality of parts and inserting integrity verification information for each of the parts into the content.

The apparatus may further include a content transmitting unit transmitting the integrity verification information for each of the parts before transmitting each of the parts.

According to another aspect of the present invention, there is provided an apparatus for using content allowing integrity verification, the apparatus comprising a content receiving unit receiving the content containing integrity verification information for each of parts of the content; a decoder decoding the received content and detecting the integrity verification information; and an integrity verification unit verifying the integrity of each of the parts based on the detected integrity verification information.

### BRIEF DESCRIPTION OF THE DRAWINGS

The above and other aspects of the present invention will become more apparent by describing in detail exemplary embodiments thereof with reference to the attached drawings in which:
FIG. 1 is a diagram illustrating content in which a hash value is inserted into a header according to a related art method;
FIG. 2 is a diagram illustrating content in which a hash value is inserted into a license file, according to a related art method;
FIG. 3 is a block diagram of an apparatus for providing content allowing integrity verification and an apparatus for using the content, according to an exemplary embodiment of the present invention;
FIG. 4 is a flowchart illustrating a method of providing content allowing integrity verification, according to an exemplary embodiment of the present invention;
FIG. 5 is a flowchart illustrating a method of using content allowing integrity verification, according to an exemplary embodiment of the present invention;
FIG. 6 is a diagram illustrating content in which a hash value is inserted into parts of content, according to an exemplary embodiment of the present invention
FIG. 7 is a diagram illustrating buffering of the content shown in FIG. 6 by using a play buffer, according to an exemplary embodiment of the present invention;
FIG. 8 is a diagram illustrating content in which encrypted secret information is inserted into each part, according to an exemplary embodiment of the present invention;
FIG. 9 is a block diagram illustrating a header of content, which contains information regarding a location where encrypted secret information is inserted, according to an exemplary embodiment of the present invention; and
FIG. 10 is a block diagram illustrating a license file that contains information regarding a location where encrypted secret information is inserted, according to an exemplary embodiment of the present invention.

### DETAILED DESCRIPTION OF THE INVENTION

Hereinafter, the present invention will now be described more fully with reference to the accompanying drawings, in which exemplary embodiments of the invention are shown.

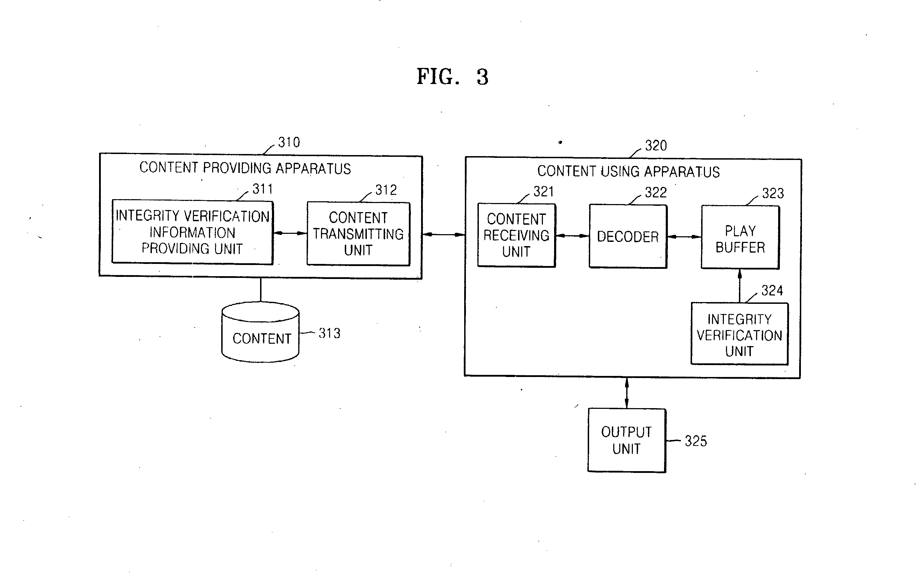

FIG. 3 is a block diagram of a content providing apparatus 310 for providing content allowing integrity verification and a content using apparatus 320 for using the content, according to an exemplary embodiment of the present invention. Referring to FIG. 3, the content providing apparatus 310 includes an integrity verification information providing unit 311 that divides content, which is to be provided, into a plurality of parts and inserts integrity verification information for each of the parts into the content. In order to transmit the content containing the integrity verification information to the content using apparatus 320, the content providing apparatus 310 may further include a content transmitting unit 312. The content transmitting unit 312 transmits the integrity verification information for each of the parts prior to transmitting each of the parts. However, the present invention is not limited to the above description. For example, one of the parts may be transmitted before transmission of its integrity verification information. In this case, the integrity verification information of the subsequent part must be transmitted prior to transmitting of a subsequent part so that the content using apparatus 320 can perform integrity verification on the one of the parts before it is reproduced.

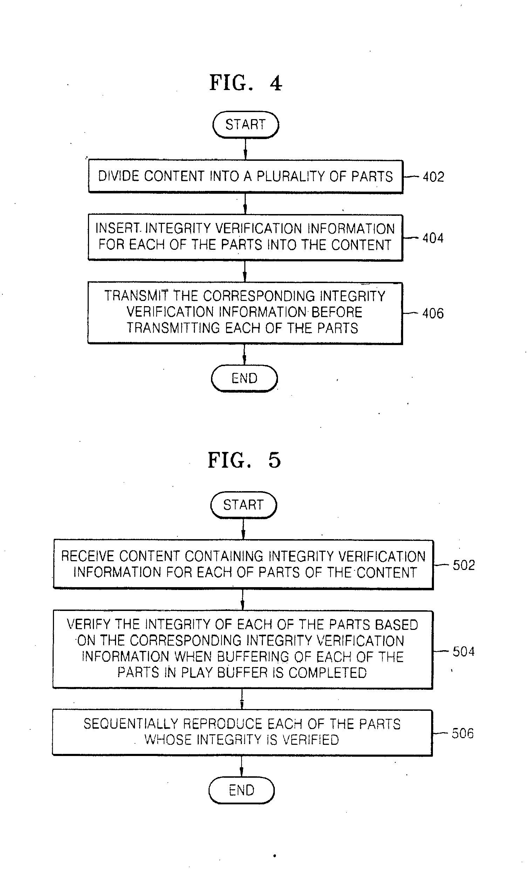

The content using apparatus 320 includes a content receiving unit 321 that receives content that contains integrity verification information for each part of the content, a decoder 322 that decodes the received content and detects the integrity verification information, and an integrity verification unit 324 that verifies the integrity of each of the parts based on the integrity verification information before reproduction of each of the parts. The content using apparatus 320 may further include a play buffer 323 that buffers data decoded by the decoder 322. In this case, the integrity verification unit 324 can verify the integrity of each part when buffering of each part by the play buffer 323 is completed. In an exemplary embodiment of the present invention, the part whose integrity has been verified is reproduced and output to the output unit 325. The content providing apparatus 310 and the content using apparatus 320 will now be described in greater detail with reference to FIGS. 4 through 10.

FIG. 4 is a flowchart illustrating a method of providing content allowing integrity verification, according to an exemplary embodiment of the present invention. Referring to FIGS. 3 and 4, the integrity verification information providing unit 311 divides a content file that is to be provided into a plurality of parts (operation 402). The content file may be divided into equal parts or unequal parts.

Next, the integrity verification information providing unit 311 inserts integrity verification information for each part into the respective part to which the information relates (operation 404). Thus, the integrity of each part can be verified even before receiving the whole content file. The integrity verification information for the respective parts may be different values or the same value. For example, the integrity verification information may be hash values obtained by respectively applying a hash function to the parts with an equal size. In this case, the hash values of the respective parts may be not the same.

In another exemplary embodiment of the present invention, a value obtained by encrypting predetermined secret information using a secret key received from a content provider may be inserted into each part. The content that has been generated or processed as described above may be transmitted to the content using apparatus 320 via the content transmitting unit 312, by using a streaming service or the like. In this case, the corresponding integrity verification information is transmitted before transmitting each part (operation 406).

FIG. 5 is a flowchart illustrating a method of using content allowing integrity verification, according to an exemplary embodiment of the present invention. Referring to FIGS. 3 and 5, the content receiving unit 321 of the content using apparatus 320 receives content containing integrity verification information from the content providing apparatus 310 (operation 502). During a streaming service, content is reproduced while being received little by little. When buffering of each part of the content decoded by the decoder 322 in the play buffer 323 is completed, the integrity verification unit 324 verifies the integrity of each part based on the respective integrity verification information for each part so as to determine whether to start reproduction of a subsequent part after reproduction of the part preceding the subsequent part (operation 504). In other words, if integrity verification of a part fails, that is, if a part is determined to be forged or altered, the reproduction of the part is stopped, and if the integrity verification of parts continuously succeeds, the parts are sequentially reproduced (operation 506). If a hash value is used as the integrity verification information, the hash value is calculated by applying a hash function that a content provider has used to each part of the content, and is compared with a hash value extracted from the content. If the result of encrypting secret information is used as the integrity verification information, it is determined whether the result is extracted from each part. If the result is extracted, the secret information is obtained by decrypting the result, and it is determined whether the secret information is a correct value that has not been altered.

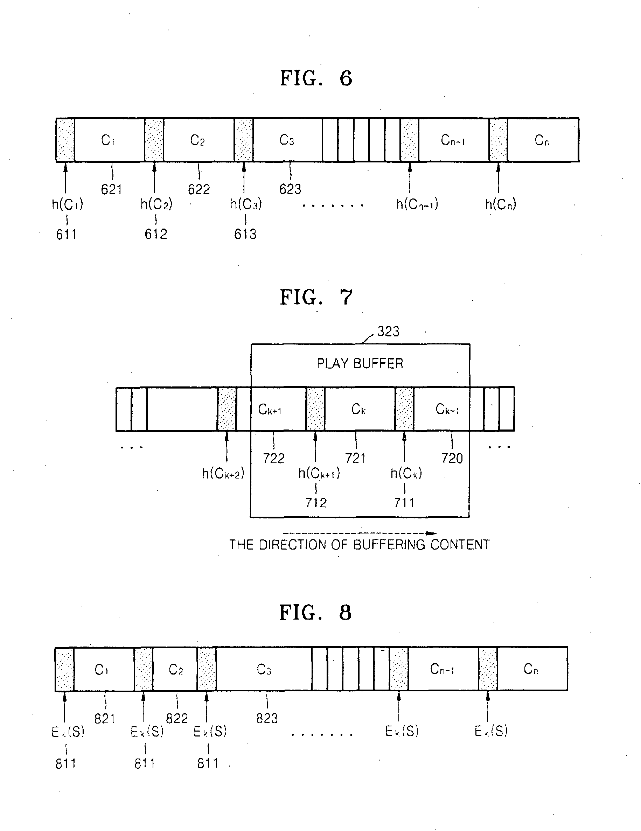

FIG. 6 is a diagram illustrating content in which a hash value is inserted into parts of content, according to an exemplary embodiment of the present invention. In the current exemplary embodiment, the content file is divided into appropriate parts, and a hash value is calculated by applying a hash function to each of the parts (not to the whole content file) and inserted between the parts (not into a header of or a license file of the content). In the current exemplary embodiment, the content file is divided into equal parts, but the present invention is not limited thereto. That is, the content file may be divided into unequal parts, and in this case, information regarding a location into which each hash value is inserted is provided together with content so that a receiving side can extract each hash value. Content may be divided into units of Groups of Pictures (GOPs), but the present invention is not limited thereto. However, in order to calculate a hash value for each part of the content in a time efficient manner, the units into which the content is divided is preferably smaller than the size of a play buffer. Referring to FIG. 6, content is divided into n parts C₁ 621, C₂ 622, C₃ 623, through to Cₙ; and n hash values h(C₁)611, h(C₂) 612, h(C₃) 613, through to h(Cₙ), which are calculated for the respective parts C₁ 621, C₂ 622, C₃ 623, through to Cₙ, are respectively inserted before the parts C₁ 621, C₂ 622, C₃ 623, through to Cₙ.

When content is transmitted, calculated hash values may be inserted into the content by defining and using a new packet containing the hash values or by using the existing packets. Since a new packet can be defined according to standards, such as the Moving Picture Experts Group (MPEG) standard, packets each having a identifier indicating inclusion of a hash value are defined, and the packets each containing the hash value are transmitted before transmitting packets each containing one part of the content. In order to use the existing packets, null packets may be used. When content is transmitted, hash values for the respective parts of the content are recorded in a plurality of null packets and the null packets are transmitted in the order illustrated in FIG. 6.

FIG. 7 is a diagram illustrating buffering of the content shown in FIG. 6 by using a play buffer 323, according to an exemplary embodiment of the present invention. Referring to FIG. 7, the end of a content part Cₖ₋₁ 720 to the head of a content part C_{K+1} 722 is buffered in the play buffer 323. If the content part Cₖ₋₁ 720 is being reproduced and the whole subsequent content part Cₖ 721 remains in the play buffer 323 together with the corresponding hash value h(Cₖ) 711, integrity verification is performed on Cₖ 721. That is, a hash value of the content part Cₖ 721 is calculated, inserted into the content, and compared with the hash value h(Cₖ) 711. If the two hash values are different from each other, the content part Cₖ 721 is forged and thus, reproduction of the content part Cₖ 721 is not performed. If the two hash values are the same, the content part Cₖ 721 is continuously reproduced, and integrity verification is performed on the content part C_{K+1} 722 when both the content part C_{K+1} 722 and its hash value h(Cₖ₊₁) 712 are completely buffered in the play buffer 323.

FIG. 8 illustrates encrypted secret information inserted into each content part, according to an exemplary embodiment of the present invention. Referring to FIG. 8, content is divided into n parts: C₁ 821, C₂ 822, C₃ 823, through to Cₙ, and Eₖ (S) 811, which is obtained by encrypting predetermined secret information S as integrity verification information with a key k, is inserted before the content part C₁ 821, C₂ 822, C₃ 823, through to Cₙ. As described above with reference to FIG. 7, an instant of time when integrity verification is performed can also be applied to the current exemplary embodiment of the present invention. In the current exemplary embodiment, a content file is divided into unequal parts. In this case, the integrity verification information providing unit 311 must provide location information indicating where each of the integrity verification information is inserted so that the content using apparatus 320 can detect the integrity verification information.

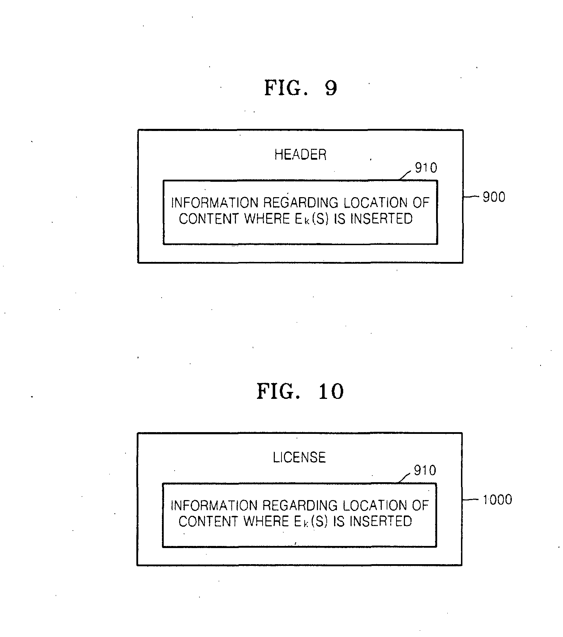

FIG. 9 is a block diagram illustrating a header 900 of content, which contains information 910 regarding a location where encrypted secret information is inserted, according to an exemplary embodiment of the present invention. FIG. 10 is a block diagram illustrating a license file 1000 that contains information 910 regarding a location where encrypted secret information is inserted, according to an exemplary embodiment of the present invention. In order to prove that the information 910 is provided by the content providing apparatus 310, the information 910 may be electronically signed using a secret key of a content provider. Providing of the information 910 described with reference to FIGS. 9 and 10 can also be applied to an exemplary embodiment of the present invention that uses a hash value.

The integrity verification information providing unit 311 inserts each value Eₖ (S), which is obtained by encrypting certain secret information S with a secret key k, into content that is to be provided, electronically signs information indicating the location of each value Eₖ(S) by using the secret key k, and provides the result of signing to the content using apparatus 320. The content using apparatus 320 can determine that the information has been provided by a content provider by checking the result of signing. As described above, the information 910 may be inserted into the head of the content or into a license necessary to use the content.

The secret key k used to calculate the value Eₖ (S) is encrypted using unique information u identifying a user when the content is provided to the user in accordance with the user's request. The unique information may be a public key u that is uniquely allocated to the user. It is assumed that the value obtained by encrypting the secret key k using the unique information u is Eᵤ(k). The value Eᵤ (k) is transmitted separately or together with the content so that the user can obtain the secret key k of the content provider. For example, the value Eᵤ (k) may be inserted into a license that is to be transmitted. Since the value Eᵤ (k) has been encrypted, nobody except the authorized user can decrypt it, and therefore, the value Eᵤ (k) may be transmitted together with the content. Also, a value Eᵤ (S) obtained by encrypting the secret information S, which is inserted into the content, by using the unique information u may be inserted into the license that is to be provided to the user. In this case, similarly to the value Eᵤ(k), the value Eᵤ(S) may be transmitted using various ways to the user without being inserted into the license. Since the user can obtain the secret information S, which is provided from the content provider, by decrypting the value Eᵤ(S), the user can determine whether the secret information inserted into the content has been altered.

The integrity verification unit 324 calculates the key k and the secret information S by decrypting the values Eᵤ(k) and Eᵤ(S) received from the content providing apparatus 310 by using the unique information u. Also, the integrity verification unit 324 determines whether the encrypted secret information Eₖ(S) is detected at all locations specified in location information received from the content providing apparatus 310 while receiving and reproducing the content, and decrypts the value Eₖ (S) using the key k. Next, the integrity verification unit 324 determines whether the result of decrypting the value Eₖ (S) is identical to the calculated secret information S in order to check the integrity of the content.

The method as described above, according to the present invention, can be embodied as computer readable code in a computer readable medium.

As described above, according to the present invention, it is possible to verify the integrity of content even during streaming of the content. That is, even if the whole content file is not received and stored, it is possible to verify the integrity of content transmitted, thereby allowing a user to conveniently use the content.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of providing content, the method comprising:
dividing the content into a plurality of parts; and
inserting information for each of the plurality of parts of the content into the content;
providing the content in a form which allows integrity verification to determine whether the content has been forged or altered;
wherein the inserting of the information comprises inserting integrity verification information by inserting hash values into the plurality of parts, wherein each of the hash values is calculated by applying a hash function to each of the plurality of parts; and
**characterized by** the further step of:
providing information indicating a plurality of locations where the integrity verification information for each of the plurality of parts is inserted so as to allow a user of the content to detect the integrity verification information.

2. The method of claim 1, further comprising, transmitting the integrity verification information corresponding to each of the plurality of parts.

3. The method of claim 1, wherein the inserting of the hash values comprises recording the hash values of the plurality of parts in a plurality of packets each having an identifier and transmitting the packets, when transmitting the content.

4. The method of claim 1, wherein the inserting of the hash values comprises recording the hash values of the plurality of parts in a plurality of null packets and transmitting the plurality of null packets along with the content.

5. The method of claim 1, wherein the inserting of the integrity verification information comprises inserting a value obtained by encrypting secret information into each of the plurality of parts.

6. The method of any of claims 1-5, wherein the providing of the information comprises electronically signing the information indicating the plurality of locations with a secret key of a provider of the content.

7. The method of any of claims 1-5, wherein the providing of the information comprises recording the information indicating the plurality of locations in a header of the content.

8. The method of any of claims 1-5, wherein the providing of the information comprises recording the information indicating the plurality of locations in a license file for the content.

9. The method of claim 5, wherein the inserting of the value obtained by encrypting the secret information comprises encrypting the secret information with a secret key of a provider of the content.

10. The method of claim 9, further comprising providing information obtained by encrypting the secret key of the provider of the content with unique information of a user so as to allow the user of the content to obtain the secret key of the provider of the content.

11. The method of claim 5, further comprising providing information obtained by encrypting the secret information with unique information of a user so as to allow the user of the content to determine whether the encrypted secret information has been altered.

12. A method of using content, the method comprising:
receiving the content containing information for each of a plurality of parts of the content; and
**characterised by**:
receiving information indicating a plurality of locations where integrity verification information for the plurality of parts are inserted;
verifying integrity of each of the plurality of parts based on the integrity verification information for determining whether the content has been forged or altered;
wherein the integrity verification information for each of the plurality of parts comprises a first hash value that a provider of the content calculates by applying a hash function to each of the parts, and
the verifying of the integrity of each of the plurality of parts comprises:
calculating a second hash value by applying a hash function to each of the plurality of parts; and
comparing the first hash value with the second hash value.

13. The method of claim 12, wherein the verifying of the integrity of each of the plurality of parts comprises verifying the integrity of each of the plurality of parts when buffering of each of the plurality of parts by a play buffer (323) is completed.

14. The method of claim 12, wherein the integrity verification information for each of the parts comprises first encrypted secret information obtained by the provider of the content encrypting secret information with a secret key, and
the verifying of each of the plurality of parts comprises:
detecting and decrypting the first encrypted secret information from each of the plurality of parts; and
determining whether the first encrypted secret information has been altered.

15. The method of any of claims 12-13, wherein the receiving of the information indicating the plurality of locations comprises checking an electronic signature of the provider of the content applied to the information indicating the plurality of locations.

16. The method of claim 14, further comprising receiving a second encrypted secret information obtained by the provider of the content encrypting the secret information with unique information of a user,
wherein the determining of whether the first encrypted secret information has been altered comprises comparing a result of decrypting the second encrypted secret information using the unique information of the user with a result of the decrypting the first encrypted secret information.

17. The method of claim 14, further comprising receiving information obtained by the provider of the content encrypting the secret key with unique information of a user,
wherein the decrypting of the first encrypted secret information comprises decrypting the first encrypted secret information using as a key a result of decrypting the secret key encrypted using the unique information of the user.

18. An apparatus (310) for providing content, the apparatus comprising:
an information providing unit (311) which divides the content into a plurality of parts and inserts information for each of the plurality of parts into the content; and
the apparatus (310) provides the content in a form which allows integrity verification for determining whether the content has been forged or altered;
wherein the information providing unit (311) provides integrity verification information by inserting hash values into each of the plurality of parts, wherein the hash values are calculated by applying a hash function to each of the plurality of parts; and
further **characterized in that**
the information providing unit (311) generates information indicating a plurality of locations where the integrity verification information for each of the plurality of parts is inserted so as to allow a user of the content to detect the integrity verification information.

19. The apparatus of claim 18, further comprising a content transmitting unit which transmits the integrity verification information for each of the plurality of parts.

20. The apparatus of claim 18, wherein the information providing unit (311) records the hash values of the plurality of parts in a plurality of packets each having an identifier, when transmitting the content.

21. The apparatus of claim 18, wherein the information providing unit (311) records the hash values of the plurality of parts in a plurality of null packets, when transmitting the content.

22. The apparatus of claim 18, wherein the information providing unit (311) inserts a value obtained by encrypting secret information into each of the plurality of parts.

23. The apparatus of any of claims 18-22, wherein the information providing unit (311) electronically signs the information indicating the plurality of locations using a secret key of a provider of the content.

24. The apparatus of any of claims 18-22, wherein the information providing unit (311) records the information indicating the plurality of locations in a header of the content.

25. The apparatus of any of claims 18-22, wherein the information providing unit (311) records the information indicating the plurality of locations in a license file of the content.

26. The apparatus of claim 22, wherein the information providing unit (311) encrypts the secret information using a secret key of a provider of the content.

27. The apparatus of claim 26, wherein the information providing unit (311) provides information obtained by encrypting the secret key of the provider of the content with unique information of a user so as to allow the user to obtain the secret key of the provider of the content.

28. The apparatus of claim 22, wherein the information providing unit (311) provides information obtained by encrypting the secret information with unique information of a user so as to allow the user to determine whether the encrypted secret information has been altered.

29. An apparatus (320) for using content, the apparatus comprising:
a content receiving unit (321) which receives the content containing information for each of a plurality of parts of the content;
a decoder (322) which decodes the received content; and
the apparatus (320) receives the content with integrity verification information which allows integrity verification for determining whether the content has been forged or altered;
wherein the integrity verification information for each of the plurality of parts comprises a first hash value calculated by applying a hash function to each of the plurality of parts by the provider of the content;
further **characterised in that** the content receiving unit (321) receives information indicating a plurality of locations where the integrity verification information for the respective parts is inserted
the decoder (322) detects the integrity verification information; and
an integrity verification unit (324) calculates a second hash value by applying a hash function to each of the plurality of parts, and compares the first hash value with the second hash value to verify integrity of each of the plurality of parts based on the detected integrity verification information.

30. The apparatus of claim 29, further comprising a play buffer (323) for buffering data decoded by the decoder (322),
wherein the integrity verification unit (324) verifies the integrity of each of the plurality of parts when buffering of each of the plurality of parts in the play buffer (323) is completed.

31. The apparatus of claim 29, wherein the integrity verification information for each of the plurality of parts comprises first encrypted secret information obtained by encrypting secret information with a secret key by a provider of the content, and
the integrity verification unit (324) detects and decrypts the first encrypted secret information from each of the plurality of parts, and determines whether the first encrypted secret information has been altered.

32. The apparatus of any of claims 29-31, wherein the integrity verification unit (324) checks an electronic signature of the provider of the content, which is applied to the information indicating the plurality of locations.

33. The apparatus of claim 31, wherein the content receiving unit (321) receives second encrypted secret information obtained by encrypting the secret information with unique information of the user by the content provider, and
the integrity verification unit (324) compares a result of decrypting the second encrypted secret information using the unique information of the user with a result of the decrypting the first encrypted secret information.

34. The apparatus of claim 31, wherein the content receiving unit (321) receives information obtained by encrypting the secret key using the unique information of the user by the provider of the content, and
the integrity verification unit (324) decrypts the first encrypted secret information by using as a key a result of decrypting the secret key that was encrypted using the unique information of the user.

35. A computer readable medium having recorded thereon a computer program for executing a method of providing content, as set forth in any of claims 1-11.

36. A computer readable medium having recorded thereon a computer program for executing a method of using content, as set forth in any of claims 12-17.

## Patentansprüche

1. Verfahren zum Liefern von Inhalt, wobei das Verfahren Folgendes umfasst:
Aufteilen des Inhalts in mehrere Teile; und
Einfügen von Informationen für jeden der mehreren Teile des Inhalts in den Inhalt;
Liefern des Inhalts in einer Form, die eine Vollständigkeitsüberprüfung erlaubt, um zu bestimmen, ob der Inhalt gefälscht oder geändert wurde;
wobei das Einfügen der Informationen umfasst, Vollständigkeitsüberprüfungsinformationen durch Einfügen von Hash-Werten in die mehreren Teile einzufügen, wobei jeder der Hash-Werte durch Anwenden einer Hash-Funktion auf jeden der mehreren Teile berechnet wird; und
**gekennzeichnet durch** den weiteren Schritt:
Liefern von Informationen, die mehrere Orte angeben, wo die Vollständigkeitsüberprüfungsinformationen für jeden der mehreren Teile einfügt sind, um einem Anwender des Inhalts zu ermöglichen, die Vollständigkeitsüberprüfungsinformationen zu detektieren.

2. Verfahren nach Anspruch 1, das ferner umfasst, die Vollständigkeitsüberprüfungsinformationen, die jedem der mehreren Teile entsprechen, zu senden.

3. Verfahren nach Anspruch 1, wobei das Einfügen der Hash-Werte umfasst, die Hash-Werte der mehreren Teile in mehrere Pakete aufzuzeichnen, von denen jedes einen Identifikator besitzt, und die Pakete zu senden, wenn der Inhalt gesendet wird.

4. Verfahren nach Anspruch 1, wobei das Einfügen der Hash-Werte umfasst, die Hash-Werte der mehreren Teile in mehrere Null-Pakete aufzuzeichnen und die mehreren Null-Pakete zusammen mit dem Inhalt zu senden.

5. Verfahren nach Anspruch 1, wobei das Einfügen der Vollständigkeitsüberprüfungsinformationen umfasst, einen Wert, der durch Verschlüsseln von Geheiminformationen erhalten wurde, in jeden der mehreren Teile einzufügen.

6. Verfahren nach einem der Ansprüche 1-5, wobei das Liefern der Informationen umfasst, die Informationen, die die mehreren Orte angeben, mit einem Geheimschlüssel eines Anbieters des Inhalts elektronisch zu signieren.

7. Verfahren nach einem der Ansprüche 1-5, wobei das Liefern der Informationen umfasst, die Informationen, die die mehreren Orte angeben, in einen Kopfteil des Inhalts zu aufzuzeichnen.

8. Verfahren nach einem der Ansprüche 1-5, wobei das Liefern der Informationen umfasst, die Informationen, die die mehreren Orte angeben, in eine Lizenzdatei für den Inhalt aufzuzeichnen.

9. Verfahren nach Anspruch 5, wobei das Einfügen des durch Verschlüsseln der Geheiminformationen erhaltenen Werts umfasst, die Geheiminformationen mit einem Geheimschlüssel eines Anbieters des Inhalts zu verschlüsseln.

10. Verfahren nach Anspruch 9, das ferner umfasst, die durch Verschlüsseln des Geheimschlüssels des Anbieters des Inhalts erhaltenen Informationen mit eindeutigen Informationen eines Anwenders zu liefern, um dem Anwender des Inhalts zu ermöglichen, den Geheimschlüssel des Anbieters des Inhalts zu erhalten.

11. Verfahren nach Anspruch 5, das ferner umfasst, die durch Verschlüsseln der Geheiminformationen erhaltenen Informationen mit eindeutigen Informationen eines Anwenders zu liefern, um dem Anwender des Inhalts zu ermöglichen, zu bestimmen, ob die verschlüsselten Geheiminformationen geändert wurden.

12. Verfahren zum Verwenden von Inhalt, wobei das Verfahren Folgendes umfasst:
Empfangen des Inhalts, der für jeden der mehreren Teile des Inhalts Informationen enthält; und
**gekennzeichnet durch**:
Empfangen von Informationen, die mehrere Orte angeben, wo Vollständigkeitsüberprüfungsinformationen für die mehreren Teile eingefügt sind;
Überprüfen der Vollständigkeit eines jeden der mehreren Teile aufgrund der Vollständigkeitsüberprüfungsinformationen, um zu bestimmen, ob der Inhalt gefälscht oder geändert wurde;
wobei die Vollständigkeitsüberprüfungsinformationen für jeden der mehreren Teile einen ersten Hash-Wert umfassen, den ein Anbieter des Inhalts **durch** Anwenden einer Hash-Funktion auf jeden der Teile berechnet, und
das Überprüfen der Vollständigkeit eines jeden der mehreren Teile Folgendes umfasst:
Berechnen eines zweiten Hash-Wertes **durch** Anwenden einer Hash-Funktion auf jeden der mehreren Teile; und
Vergleichen des ersten Hash-Wertes mit dem zweiten Hash-Wert.

13. Verfahren nach Anspruch 12, wobei das Überprüfen der Vollständigkeit eines jeden der mehreren Teile umfasst, die Vollständigkeit eines jeden der mehreren Teile zu überprüfen, wenn das Zwischenspeichern eines jeden der mehreren Teile durch einen Abspielzwischenspeicher (323) abgeschlossen ist.

14. Verfahren nach Anspruch 12, wobei die Vollständigkeitsüberprüfungsinformationen für jeden der Teile erste verschlüsselte Geheiminformationen umfasst, die durch den Anbieter des Inhalts durch Verschlüsseln der Geheiminformationen mit einem Geheimschlüssel erhalten wurden, und
das Überprüfen eines jeden der mehreren Teile Folgendes umfasst:
Detektieren und Entschlüsseln der ersten verschlüsselten Geheiminformationen von jedem der mehreren Teile; und
Bestimmen, ob die ersten verschlüsselten Geheiminformationen geändert wurden.

15. Verfahren nach einem der Ansprüche 12-13, wobei das Empfangen der Informationen, die die mehreren Orte angeben, umfasst, eine elektronische Signatur des Anbieters des Inhalts, die auf die Informationen, die die mehreren Orte angeben, angewendet wurde, zu überprüfen.

16. Verfahren nach Anspruch 14, das ferner umfasst, zweite verschlüsselte Geheiminformationen zu empfangen, die durch den Anbieter des Inhalts durch Verschlüsseln der Geheiminformationen mit eindeutigen Informationen eines Anwenders erhalten wurden,
wobei das Bestimmen, ob die ersten verschlüsselten Geheiminformationen geändert wurden, umfasst, ein Ergebnis des Entschlüsselns der zweiten verschlüsselten Geheiminformationen unter Verwendung der eindeutigen Informationen des Anwenders mit einem Ergebnis des Entschlüsselns der ersten verschlüsselten Geheiminformationen zu vergleichen.

17. Verfahren nach Anspruch 14, das ferner umfasst, Informationen, die durch den Anbieter des Inhalts durch Verschlüsseln des Geheimschlüssels mit eindeutigen Informationen eines Anwenders erhalten wurden, zu empfangen,
wobei das Entschlüsseln der ersten verschlüsselten Geheiminformationen umfasst, die ersten verschlüsselten Geheiminformationen unter Verwendung eines Ergebnisses des Entschlüsselns des Geheimschlüssels, der unter Verwendung von eindeutigen Informationen des Anwenders verschlüsselt wurde, als einem Schlüssel zu entschlüsseln.

18. Vorrichtung (310) zum Liefern von Inhalt, wobei die Vorrichtung Folgendes umfasst:
eine Informationsliefereinheit (311), die den Inhalt in mehrere Teile aufteilt und Informationen für jeden der mehreren Teile in den Inhalt einfügt; und
die Vorrichtung (310) den Inhalt in einer Form liefert, die eine Vollständigkeitsüberprüfung zum Bestimmen, ob der Inhalt gefälscht oder geändert wurde, ermöglicht;
wobei die Informationsliefereinheit (311) Vollständigkeitsüberprüfungsinformationen durch Einfügen von Hash-Werten in einen jeden der mehreren Teile liefert, wobei die Hash-Werte durch Anwenden einer Hash-Funktion auf jeden der mehreren Teile berechnet werden; und
ferner **dadurch gekennzeichnet, dass**
die Informationsliefereinheit (311) Informationen erzeugt, die mehrere Orte angeben, wo die Vollständigkeitsüberprüfungsinformationen für jeden der mehreren Teile eingefügt sind, um einem Anwender des Inhalts zu ermöglichen, die Vollständigkeitsüberprüfungsinformationen zu detektieren.

19. Vorrichtung nach Anspruch 18, die ferner eine Inhaltssendeeinheit umfasst, die die Vollständigkeitsüberprüfungsinformationen für jeden der mehreren Teile sendet.

20. Vorrichtung nach Anspruch 18, wobei die Informationsliefereinheit (311) die Hash-Werte der mehreren Teile in mehrere Pakete aufzeichnet, von denen jedes einen Identifikator besitzt, wenn sie den Inhalt sendet.

21. Vorrichtung nach Anspruch 18, wobei die Informationsliefereinheit (311) die Hash-Werte der mehreren Teile in mehrere Null-Pakete aufzeichnet, wenn sie den Inhalt sendet.

22. Vorrichtung nach Anspruch 18, wobei die Informationsliefereinheit (311) einen durch Verschlüsseln von Geheiminformationen erhaltenen Wert in jeden der mehreren Teile einfügt.

23. Vorrichtung nach einem der Ansprüche 18-22, wobei die Informationsliefereinheit (311) die Informationen, die die mehreren Orte angeben, unter Verwendung eines Geheimschlüssels des Anbieters des Inhalts elektronisch signiert.

24. Vorrichtung nach einem der Ansprüche 18-22, wobei die Informationsliefereinheit (311) die Informationen, die die mehreren Orte angeben, in einen Kopfteil des Inhalts aufzeichnet.

25. Vorrichtung nach einem der Ansprüche 18-22, wobei die Informationsliefereinheit (311), die Informationen, die die mehreren Orte angeben, in eine Lizenzdatei des Inhalts aufzeichnet.

26. Vorrichtung nach Anspruch 22, wobei die Informationsliefereinheit (311) die Geheiminformationen unter Verwendung eines Geheimschlüssels eines Anbieters des Inhalts verschlüsselt.

27. Vorrichtung nach Anspruch 26, wobei die Informationsliefereinheit (311) die durch Verschlüsseln des Geheimschlüssels des Anbieters des Inhalts erhaltenen Informationen mit eindeutigen Informationen eines Anwenders liefert, um dem Anwender des Inhalts zu ermöglichen, den Geheimschlüssel des Anbieters des Inhalts zu erhalten.

28. Vorrichtung nach Anspruch 22, wobei die Informationsliefereinheit (311) die durch Verschlüsseln der Geheiminformationen erhaltenen Informationen mit eindeutigen Informationen eines Anwenders liefert, um dem Anwender des Inhalts zu ermöglichen, zu bestimmen, ob die verschlüsselten Geheiminformationen geändert wurden.

29. Vorrichtung (320) zum Verwenden von Inhalt, wobei die Vorrichtung Folgendes umfasst:
eine Inhaltsempfangseinheit (321), die den Inhalt, der Informationen für jeden von mehreren Teilen des Inhalts enthält, empfängt;
einen Decodierer (322), der den empfangenen Inhalt decodiert; und
die Vorrichtung (320) den Inhalt mit Vollständigkeitsüberprüfungsinformationen empfängt, die eine Vollständigkeitsüberprüfung ermöglichen, um zu bestimmen, ob der Inhalt gefälscht oder geändert wurde;
wobei die Vollständigkeitsüberprüfungsinformationen für jeden der mehreren Teile einen ersten Hash-Wert umfassen, den ein Anbieter des Inhalts durch Anwenden einer Hash-Funktion auf jeden der Teile berechnet hat;
ferner **dadurch gekennzeichnet, dass**
die Inhaltsempfangseinheit (321) Informationen empfängt, die mehrere Orte angeben, wo die Vollständigkeitsüberprüfungsinformationen für die jeweiligen Teile eingefügt sind,
der Decodierer (322) die Vollständigkeitsüberprüfungsinformationen detektiert; und
eine Vollständigkeitsüberprüfungseinheit (324) einen zweiten Hash-Wert durch Anwenden einer Hash-Funktion auf jeden der mehreren Teile berechnet und den ersten Hash-Wert mit dem zweiten Hash-Wert vergleicht, um die Vollständigkeit eines jeden der mehreren Teile aufgrund der detektierten Vollständigkeitsüberprüfungsinformationen zu überprüfen.

30. Vorrichtung nach Anspruch 29, die ferner einen Abspielzwischenspeicher (323) umfasst, um durch den Decodierer (322) decodierte Daten zwischenzuspeichern,
wobei die Vollständigkeitsüberprüfungseinheit (324) die Vollständigkeit eines jeden der mehreren Teile überprüft, wenn das Zwischenspeichern eines jeden der mehreren Teile in dem Abspielzwischenspeicher (323) abgeschlossen ist.

31. Vorrichtung nach Anspruch 29, wobei die Vollständigkeitsüberprüfungsinformationen für jeden der mehreren Teile erste verschlüsselte Geheiminformationen umfasst, die durch einen Anbieter des Inhalts durch Verschlüsseln von Geheiminformationen mit einem Geheimschlüssel erhalten wurden, und
die Vollständigkeitsüberprüfungseinheit (324) die ersten verschlüsselten Geheiminformationen von jedem der mehreren Teile detektiert und entschlüsselt und bestimmt, ob die ersten verschlüsselten Geheiminformationen geändert wurden.

32. Vorrichtung nach einem der Ansprüche 29-31, wobei die Vollständigkeitsüberprüfungseinheit (324) eine elektronische Signatur des Anbieters des Inhalts überprüft, die auf die Informationen, die die mehreren Orte angeben, angewendet wurde.

33. Vorrichtung nach Anspruch 31, wobei die Inhaltsempfangseinheit (321) zweite verschlüsselte Geheiminformationen empfängt, die durch Verschlüsseln der Geheiminformationen mit eindeutigen Informationen eines Anwenders durch den Anbieter des Inhalts erhalten wurden, und
die Vollständigkeitsüberprüfungseinheit (324) ein Ergebnis des Entschlüsselns der zweiten verschlüsselten Geheiminformationen unter Verwendung der eindeutigen Informationen des Anwenders mit einem Ergebnis des Entschlüsselns der ersten verschlüsselten Geheiminformationen vergleicht.

34. Vorrichtung nach Anspruch 31, wobei die Inhaltsempfangseinheit (321) Informationen, die durch Verschlüsseln des Geheimschlüssels mit eindeutigen Informationen eines Anwenders durch den Anbieter des Inhalts erhalten wurden, empfängt, und
die Vollständigkeitsüberprüfungseinheit (324) die ersten verschlüsselten Geheiminformationen unter Verwendung eines Ergebnisses des Entschlüsselns des Geheimschlüssels, der unter Verwendung der eindeutigen Informationen des Anwenders verschlüsselt wurde, als einem Schlüssel entschlüsselt.

35. Computerlesbares Medium mit einem darauf aufgezeichnetem Computerprogramm zum Ausführen eines Verfahrens zum Liefern von Inhalt nach einem der Ansprüche 1-11.

36. Computerlesbares Medium mit einem darauf aufgezeichneten Computerprogramm zum Ausführen eines Verfahrens zum Verwenden von Inhalt nach einem der Ansprüche 12-17.

## Revendications

1. Procédé de fourniture de contenu, le procédé comportant les étapes consistant à :
diviser le contenu en une pluralité de parties ; et
insérer dans le contenu des informations relatives à chaque partie de la pluralité de parties du contenu ;
fournir le contenu sous une forme qui permet une vérification d'intégrité pour déterminer si le contenu a été contrefait ou modifié ;
l'insertion des informations comportant l'étape consistant à insérer des informations de vérification d'intégrité en insérant des valeurs de hachage dans la pluralité de parties, chacune des valeurs de hachage étant calculée en appliquant une fonction de hachage à chaque partie de la pluralité de parties ; et
**caractérisé par** l'étape supplémentaire consistant à :
fournir des informations indiquant une pluralité d'emplacements où sont insérées les informations de vérification d'intégrité pour chaque partie de la pluralité de parties de façon à permettre à un utilisateur du contenu de détecter les informations de vérification d'intégrité.

2. Procédé selon la revendication 1, comportant en outre l'étape consistant à émettre les informations de vérification d'intégrité correspondant à chaque partie de la pluralité de parties.

3. Procédé selon la revendication 1, l'insertion des valeurs de hachage comportant les étapes consistant à enregistrer les valeurs de hachage de la pluralité de parties dans une pluralité de paquets possédant chacun un identifiant et à émettre les paquets, lors de l'émission du contenu.

4. Procédé selon la revendication 1, l'insertion des valeurs de hachage comportant les étapes consistant à enregistrer les valeurs de hachage de la pluralité de parties dans une pluralité de paquets vides et à émettre la pluralité de paquets vides conjointement avec le contenu.

5. Procédé selon la revendication 1, l'insertion des informations de vérification d'intégrité comportant l'étape consistant à insérer une valeur obtenue en chiffrant des informations secrètes dans chaque partie de la pluralité de parties.

6. Procédé selon l'une quelconque des revendications 1 à 5, la fourniture des informations comportant l'étape consistant à signer électroniquement les informations indiquant la pluralité d'emplacements avec une clé secrète d'un fournisseur du contenu.

7. Procédé selon l'une quelconque des revendications 1 à 5, la fourniture des informations comportant l'étape consistant à enregistrer les informations indiquant la pluralité d'emplacements dans un en-tête du contenu.

8. Procédé selon l'une quelconque des revendications 1 à 5, la fourniture des informations comportant l'étape consistant à enregistrer les informations indiquant la pluralité d'emplacements dans un fichier de licence relatif au contenu.

9. Procédé selon la revendication 5, l'insertion de la valeur obtenue en chiffrant les informations secrètes comportant l'étape consistant à chiffrer les informations secrètes avec une clé secrète d'un fournisseur du contenu.

10. Procédé selon la revendication 9, comportant en outre l'étape consistant à fournir des informations obtenues en chiffrant la clé secrète du fournisseur du contenu avec des informations uniques d'un utilisateur de façon à permettre à l'utilisateur du contenu d'obtenir la clé secrète du fournisseur du contenu.

11. Procédé selon la revendication 5, comportant en outre l'étape consistant à fournir des informations obtenues en chiffrant les informations secrètes avec des informations uniques d'un utilisateur de façon à permettre à l'utilisateur du contenu de déterminer si les informations secrètes chiffrées ont été modifiées.

12. Procédé d'utilisation de contenu, le procédé comportant les étapes consistant à :
recevoir le contenu contenant des informations relatives à chaque partie d'une pluralité de parties du contenu ; et
**caractérisé par** les étapes consistant à :
recevoir des informations indiquant une pluralité d'emplacements où sont insérées des informations de vérification d'intégrité relatives à la pluralité de parties ;
vérifier l'intégrité de chaque partie de la pluralité de parties sur la base des informations de vérification d'intégrité pour déterminer si le contenu a été contrefait ou modifié ;
les informations de vérification d'intégrité relatives à chaque partie de la pluralité de parties comportant une première valeur de hachage qu'un fournisseur du contenu calcule en appliquant une fonction de hachage à chacune des parties, et
la vérification de l'intégrité de chaque partie de la pluralité de parties comportant les étapes consistant à :
calculer une deuxième valeur de hachage en appliquant une fonction de hachage à chaque partie de la pluralité de parties ; et
comparer la première valeur de hachage avec la deuxième valeur de hachage.

13. Procédé selon la revendication 12, la vérification de l'intégrité de chaque partie de la pluralité de parties comportant l'étape consistant à vérifier l'intégrité de chaque partie de la pluralité de parties lorsque la mise en tampon de chaque partie de la pluralité de parties par un tampon (323) de lecture est terminée.

14. Procédé selon la revendication 12, les informations de vérification d'intégrité relatives à chacune des parties comportant des premières informations secrètes chiffrées obtenues du fait du chiffrement par le fournisseur du contenu des informations secrètes avec une clé secrète, et
la vérification de chaque partie de la pluralité de parties comportant les étapes consistant à :
détecter et déchiffrer les premières informations secrètes chiffrées issues de chaque partie de la pluralité de parties ; et
déterminer si les premières informations secrètes chiffrées ont été modifiées.

15. Procédé selon l'une quelconque des revendications 12 à 13, la réception des informations indiquant la pluralité d'emplacements comportant l'étape consistant à contrôler une signature électronique du fournisseur du contenu appliquée aux informations indiquant la pluralité d'emplacements.

16. Procédé selon la revendication 14, comportant en outre l'étape consistant à recevoir des deuxièmes informations secrètes chiffrées obtenues du fait du chiffrement par le fournisseur du contenu des informations secrètes avec des informations uniques d'un utilisateur,
la détermination du fait que les premières informations secrètes chiffrées ont été modifiées ou non comportant l'étape consistant à comparer un résultat de déchiffrement des deuxièmes informations secrètes chiffrées à l'aide des informations uniques de l'utilisateur avec un résultat du déchiffrement des premières informations secrètes chiffrées.

17. Procédé selon la revendication 14, comportant en outre l'étape consistant à recevoir des informations obtenues du fait du chiffrement par le fournisseur du contenu de la clé secrète avec des informations uniques d'un utilisateur,
le déchiffrement des premières informations secrètes chiffrées comportant l'étape consistant à déchiffrer les premières informations secrètes chiffrées en utilisant comme clé un résultat du déchiffrement de la clé secrète chiffrée à l'aide des informations uniques de l'utilisateur.

18. Appareil (310) de fourniture de contenu, l'appareil comportant :
une unité (311) de fourniture d'informations qui divise le contenu en une pluralité de parties et insère des informations relatives à chaque partie de la pluralité de parties dans le contenu ; et
l'appareil (310) fournissant le contenu sous une forme qui permet une vérification d'intégrité pour déterminer si le contenu a été contrefait ou modifié ;
l'unité (311) de fourniture d'informations fournissant des informations de vérification d'intégrité en insérant des valeurs de hachage dans chaque partie de la pluralité de parties, les valeurs de hachage étant calculées en appliquant une fonction de hachage à chaque partie de la pluralité de parties ; et **caractérisé en outre en ce que**
l'unité (311) de fourniture d'informations génère des informations indiquant une pluralité d'emplacements où sont insérées les informations de vérification d'intégrité relatives à chaque partie de la pluralité de parties de façon à permettre à un utilisateur du contenu de détecter les informations de vérification d'intégrité.

19. Appareil selon la revendication 18, comportant en outre une unité d'émission de contenu qui émet les informations de vérification d'intégrité relatives à chaque partie de la pluralité de parties.

20. Appareil selon la revendication 18, l'unité (311) de fourniture d'informations enregistrant les valeurs de hachage de la pluralité de parties dans une pluralité de paquets possédant chacun un identifiant, lors de l'émission du contenu.

21. Appareil selon la revendication 18, l'unité (311) de fourniture d'informations enregistrant les valeurs de hachage de la pluralité de parties dans une pluralité de paquets vides, lors de l'émission du contenu.

22. Appareil selon la revendication 18, l'unité (311) de fourniture d'informations insérant une valeur obtenue en chiffrant des informations secrètes dans chaque partie de la pluralité de parties.

23. Appareil selon l'une quelconque des revendications 18 à 22, l'unité (311) de fourniture d'informations signant électroniquement les informations indiquant la pluralité d'emplacements à l'aide d'une clé secrète d'un fournisseur du contenu.

24. Appareil selon l'une quelconque des revendications 18 à 22, l'unité (311) de fourniture d'informations enregistrant les informations indiquant la pluralité d'emplacements dans un en-tête du contenu.

25. Appareil selon l'une quelconque des revendications 18 à 22, l'unité (311) de fourniture d'informations enregistrant les informations indiquant la pluralité d'emplacements dans un fichier de licence du contenu.

26. Appareil selon la revendication 22, l'unité (311) de fourniture d'informations chiffrant les informations secrètes à l'aide d'une clé secrète d'un fournisseur du contenu.

27. Appareil selon la revendication 26, l'unité (311) de fourniture d'informations fournissant des informations obtenues en chiffrant la clé secrète du fournisseur du contenu avec des informations uniques d'un utilisateur de façon à permettre à l'utilisateur d'obtenir la clé secrète du fournisseur du contenu.

28. Appareil selon la revendication 22, l'unité (311) de fourniture d'informations fournissant des informations obtenues en chiffrant les informations secrètes avec des informations uniques d'un utilisateur de façon à permettre à l'utilisateur de déterminer si les informations secrètes chiffrées ont été modifiées.

29. Appareil (320) d'utilisation de contenu, l'appareil comportant :
une unité (321) de réception de contenu qui reçoit le contenu contenant des informations relatives à chaque partie d'une pluralité de parties du contenu ;
un décodeur (322) qui décode le contenu reçu ; et
l'appareil (320) recevant le contenu avec des informations de vérification d'intégrité qui permettent une vérification d'intégrité pour déterminer si le contenu a été contrefait ou modifié ;
les informations de vérification d'intégrité relatives à chaque partie de la pluralité de parties comportant une première valeur de hachage calculée en appliquant une fonction de hachage à chaque partie de la pluralité de parties par le fournisseur du contenu ;
**caractérisé en outre en ce que**
l'unité (321) de réception de contenu reçoit des informations indiquant une pluralité d'emplacements où sont insérées les informations de vérification d'intégrité relatives aux parties respectives ;
le décodeur (322) détecte les informations de vérification d'intégrité ; et
une unité (324) de vérification d'intégrité calcule une deuxième valeur de hachage en appliquant une fonction de hachage à chaque partie de la pluralité de parties,
et compare la première valeur de hachage avec la deuxième valeur de hachage pour vérifier l'intégrité de chaque partie de la pluralité de parties sur la base des informations de vérification d'intégrité détectées.

30. Appareil selon la revendication 29, comportant en outre un tampon (323) de lecture servant à mettre en tampon des données décodées par le décodeur (322), l'unité (324) de vérification d'intégrité vérifiant l'intégrité de chaque partie de la pluralité de parties lorsque la mise en tampon de chaque partie de la pluralité de parties dans le tampon (323) de lecture est terminée.

31. Appareil selon la revendication 29, les informations de vérification d'intégrité relatives à chaque partie de la pluralité de parties comportant des premières informations secrètes chiffrées obtenues en chiffrant des informations secrètes avec une clé secrète par un fournisseur du contenu, et l'unité (324) de vérification d'intégrité détectant et déchiffrant les premières informations secrètes chiffrées issues de chaque partie de la pluralité de parties, et déterminant si les premières informations secrètes chiffrées ont été modifiées.

32. Appareil selon l'une quelconque des revendications 29 à 31, l'unité (324) de vérification d'intégrité contrôlant une signature électronique du fournisseur du contenu, qui est appliquée aux informations indiquant la pluralité d'emplacements.

33. Appareil selon la revendication 31, l'unité (321) de réception de contenu recevant des deuxièmes informations secrètes chiffrées obtenues en chiffrant les informations secrètes avec des informations uniques de l'utilisateur par le fournisseur de contenu, et l'unité (324) de vérification d'intégrité comparant un résultat du déchiffrement des deuxièmes informations secrètes chiffrées à l'aide des informations uniques de l'utilisateur avec un résultat du déchiffrement des premières informations secrètes chiffrées.

34. Appareil selon la revendication 31,
l'unité (321) de réception de contenu recevant des informations obtenues du fait du chiffrement de la clé secrète par le fournisseur du contenu à l'aide des informations uniques de l'utilisateur, et
l'unité (324) de vérification d'intégrité déchiffrant les premières informations secrètes chiffrées en utilisant comme clé un résultat du déchiffrement de la clé secrète chiffrée à l'aide des informations uniques de l'utilisateur.

35. Support lisible par ordinateur sur lequel est enregistré un programme d'ordinateur destiné à exécuter un procédé de fourniture de contenu, tel qu'exposé dans l'une quelconque des revendications 1 à 11.

36. Support lisible par ordinateur sur lequel est enregistré un programme d'ordinateur destiné à exécuter un procédé d'utilisation de contenu, tel qu'exposé dans l'une quelconque des revendications 12 à 17.
